# DEMANDE DE BREVET EUROPEEN

(11) **EP 0 995 976 A1**
(43) Date de publication de la demande: **26.04.2000**
(21) Numéro de dépôt: 99402314.1
(22) Date de dépôt: 22.09.1999
(51) Int. Cl.: G01F 11/04

(54) **Embout doseur et récipient équipé d'un embout doseur selon l'invention**

(30) Priorité: 23.10.1998 FR 9813327
(71) Demandeur: L'OREAL, 75008 Paris (FR)
(72) Inventeur: Baudin, Gilles, 95330 Domont (FR); Bonningue, Philippe, 75020 Paris (FR)
(74) Mandataire: Boulard, Denis

(57) **Abrégé**

La présente demande concerne un embout doseur (1) comprenant une chambre doseuse (30), à l'intérieur de laquelle est monté à coulisse un piston (24), monté de manière à pouvoir passer d'une première position dans laquelle la chambre doseuse (30) a un volume maximum à une seconde position dans laquelle la chambre doseuse (30) a un volume minimum, ladite chambre doseuse comprenant au moins un passage d'entrée (16, 17), ouvert, lorsque le piston (24) est dans la première position, et sensiblement fermé lorsque le piston (24) est dans la seconde position, le piston (24) étant couplé à un élément de fermeture (50) qui, dans la première position du piston (24) obture sensiblement au moins un passage de sortie (15) de la chambre doseuse (30), et libère ledit (ou lesdits) passage(s) de sortie (15) lors de la fermeture du (ou des) passage(s) d'entrée (16, 17). Selon l'invention, l'élément de fermeture (50) se déplace sur une course inférieure à la course du piston (24).

## Description

La présente invention a trait à un embout doseur pour la distribution sous forme de doses de volume prédéterminé, d'un produit fluide, notamment un produit cosmétique tel qu'un shampooing, un après shampooing, un gel, une lotion, un lait, etc. L'invention concerne également un ensemble de conditionnement et de distribution équipé d'un embout doseur selon la présente invention.

Dans le domaine de la cosmétique en particulier, bon nombre de produits capillaires, en particulier les shampooings, sont conditionnés dans des récipients à parois déformables dont le col est obturé par une paroi percée en son centre d'un ou plusieurs petits orifices pour la sortie du produit. Pour distribuer le produit, le récipient est retourné tête en bas. Une pression exercée sur les parois déformables du récipient permet de forcer le produit au travers du ou des orifices. Le produit est récupéré dans le creux de la main de celui ou celle qui l'utilise, et appliqué sur la chevelure. Ce geste simple ne permet pas toutefois, de doser la quantité de produit distribué.

Certes, il existe des dispositifs pour le dosage d'un produit à distribuer, mais, qui sont d'une complexité telle, que leur coût est totalement inadapté avec les impératifs économiques de certains circuits de distribution, en particulier la grande distribution.

Le brevet US-A-5 090 600 décrit un embout doseur du type comportant une chambre doseuse formée à l'intérieur d'un piston dont une extrémité libre est pourvue d'ouvertures aptes à permettre la sortie dosée du produit. Le dégagement des ouvertures de la chambre doseuse est obtenu au moyen d'une pression exercée par le produit sur une face du piston. Le produit s'écoule ensuite par gravité en position dégagée des ouvertures. Lors de la sortie du produit, l'élément de fermeture émerge de façon sensible hors de la chambre doseuse. Un des problèmes liés à une telle conception, tient au fait que l'élément assurant la fermeture des orifices de sortie de la chambre doseuse forme une seule pièce avec le piston. De ce fait l'amplitude du mouvement de l'élément de fermeture est identique à l'amplitude du mouvement du piston. L'expulsion d'une dose importante de produit nécessite un mouvement de grande amplitude de l'élément de fermeture, et donc, de ce fait, une tête de distribution à fort encombrement, avec un élément de fermeture qui, en position de distribution, émerge de façon importante à l'extérieur de la chambre doseuse. Une telle conception est relativement pénalisante d'un point de vue esthétique, en particulier, lorsqu'il s'agit de conditionner des produits cosmétiques. Une alternative consisterait à une utiliser une chambre doseuse à section plus importante, l'expulsion de la dose nécessitant alors une course plus faible du piston et donc, de l'élément de fermeture, mais exigerait toutefois une pression importante pour entraîner le piston, laquelle pression importante serait incompatible avec les contraintes liées à l'utilisation des produits cosmétiques.

En outre, Un tel embout est particulièrement approprié pour la distribution dosée de produits très liquides tels que des boissons. En revanche, un tel système peut difficilement être utilisé pour la distribution de produits visqueux, tels que couramment utilisés notamment dans le domaine de la cosmétique. En effet, la viscosité de ces produits, n'autorise pas un écoulement suffisamment rapide de la dose de produit, sous le seul effet de son poids. En outre, les ouvertures sont formées d'orifices percés dans la paroi de la chambre doseuse, et donc orientés radialement par rapport à la section de ladite chambre doseuse. Ainsi, en sortie, le produit sort avec une composante essentiellement radiale, qui peut être acceptable lorsque le produit s'écoule uniquement sous l'effet de son poids. En revanche, une telle sortie radiale est totalement inacceptable lorsque le produit sort sous pression, dans la mesure où il devient très difficile de récupérer le produit distribué de manière localisée.

Le brevet US-A-2 904 227 décrit un embout pour la distribution dosée d'un produit, comprenant une chambre de dosage à l'intérieur de laquelle est monté coulissant un piston. Le piston est traversé par un canal axial se terminant au voisinage de l'extrémité libre du piston par une portion radiale débouchant sur un orifice de sortie. En position de repos, l'orifice de sortie est obturé. Pour distribuer une dose de produit, l'orifice de sortie est dégagé sous la pression du produit s'exerçant sur le piston. Le produit circule au travers d'une portion radiale du canal, passe dans la partie axiale du canal, et sort au travers de l'orifice de sortie radial. De la même manière que pour le dispositif du document précédent, la sortie du produit s'accompagne d'un mouvement à l'extérieur de la chambre doseuse d'un élément de fermeture, solidaire d'un piston, et dont l'amplitude est fonction de la dose à distribuer.

En outre, et de la même manière que pour le dispositif du document précédent, le produit sort avec une très forte composante radiale, qui ne permet pas la distribution localisée du produit. En particulier, dans le cas d'un produit cosmétique, il est difficile de récupérer le produit distribué au creux de la main. En outre, le passage obligé du produit au travers de ce canal axial ménagé à l'intérieur du piston, rend le dispositif tout particulièrement inadapté pour des forts débits, en particulier pour des produits à forte viscosité. De plus, un tel canal axial, est sujet à encrassement, en particulier après une longue période d'inutilisation, pouvant rendre le dispositif totalement inutilisable.

Aussi, est-ce un des objets de l'invention que de fournir un embout doseur résolvant en tout ou partie, les problèmes discutés en référence aux dispositifs de la technique antérieure.

C'est en particulier un objet de l'invention que de fournir un embout doseur dont le mouvement de l'élément de fermeture, obturant un passage de sortie de la chambre doseuse, ne soit pas lié au volume de la dose à distribuer, de sorte que, même pour des doses de volume important, le mouvement de l'élément de fermeture, notamment à l'extérieur de la chambre doseuse, soit d'amplitude limitée.

C'est en particulier un objet de l'invention que de fournir un embout doseur, facilement utilisable, et à faible coût de revient.

C'est un autre objet de l'invention que de fournir un embout doseur, particulièrement adapté à la distribution dosée de produits à forte viscosité.

C'est un autre objet de l'invention que de fournir un embout doseur, permettant la distribution dosée et localisée d'un produit sous pression.

Selon l'invention, ces objets sont atteints en réalisant un embout doseur destiné à être monté sur un récipient contenant un produit, ledit embout comprenant une chambre doseuse, à l'intérieur de laquelle est monté à coulisse un piston, monté de manière à pouvoir passer d'une première position dans laquelle la chambre doseuse a un volume maximum à une seconde position dans laquelle la chambre doseuse a un volume minimum, ladite chambre doseuse comprenant au moins un passage d'entrée, ouvert, lorsque le piston est dans la première position, et fermé de façon sensiblement étanche lorsque le piston est dans la seconde position, le piston étant couplé à un élément de fermeture qui, dans la première position du piston obture de façon sensiblement étanche au moins un passage de sortie de la chambre doseuse, et libère ledit passage de sortie lors de la fermeture du passage d'entrée, ledit élément de fermeture se déplaçant sur une course inférieure à la course du piston. Dans la pratique, l'élément de fermeture se déplace avantageusement sur une course correspondant sensiblement à la hauteur axiale du (ou des) passage(s) d'entrée, course sur laquelle l'élément de fermeture assure le maintien en position sensiblement fermée du (ou des) passage(s) de sortie de la chambre doseuse tant que les passages d'entrée de la chambre doseuse sont ouverts. Ensuite, une fois le (ou les passage(s) de sortie dégagé(s), ledit élément de fermeture est immobilisé. A partir de cet instant, seul le piston se déplace à l'intérieur de la chambre doseuse de manière à expulser la dose qu'elle contient. En d'autres termes, l'élément de fermeture n'est solidaire du piston que sur une portion de la course de ce dernier. On autorise ainsi la distribution de doses de plus grand volume, tout en limitant la portion de l'élément de fermeture qui va émerger hors de la chambre doseuse lors de la distribution de la dose. On améliore ainsi l'esthétique et l'aspect pratique de l'ensemble réalisé.

De façon simplifiée, le piston définit, en combinaison avec l'élément de fermeture, une paroi dont une première face est en communication avec le récipient, et dont une seconde face (au moins en partie) est en communication avec la chambre doseuse. Lors de la distribution de la dose, la pression du produit s'exerce en premier lieu sur la portion de paroi correspondant à l'élément de fermeture, et ce jusqu'à ce que les passages d'entrée de la chambre doseuse soient obturés. Dans cette première phase, l'élément de fermeture entraîne le piston en direction du passage de sortie de la chambre doseuse. Ensuite, lorsque le (ou les) passage(s) d'entrée de la chambre doseuse sont fermés, et que les passages de sortie de la chambre doseuse sont dégagés, l'élément de fermeture est immobilisé. La pression du produit s'exerce ensuite sur le piston lui même, qui se déplace indépendamment de l'élément de fermeture, jusqu'à ce qu'il atteigne la seconde position.

Avantageusement, ledit (ou lesdits) passage(s) de sortie ainsi que l'élément de fermeture sont agencés de sorte que le produit sorte de l'embout doseur selon un au moins un flux à composante essentiellement axiale. Typiquement, le (ou les) passage(s) de sortie sont réalisés entre l'élément de fermeture et une ouverture formée dans une paroi de la chambre doseuse située à l'opposé du (ou des) passage(s) d'entrée. Ainsi, il est possible dans une large mesure, en modifiant le nombre de passages et leur taille, de jouer sur les débits de sortie du produit. Dans le cas d'un élément de fermeture cylindrique de révolution, on peut définir un ou plusieurs passages d'écoulement du produit pouvant s'étendre sur un angle pouvant varier de 1° à 360°. Cette flexibilité autorise la distribution de produits ayant une viscosité choisie dans la gamme allant des produits très liquides aux produits très visqueux, tels que les shampooings ou les gels. De plus, avec une pression exercée dans des conditions normales d'utilisation, la sortie du produit se fait essentiellement selon un axe, en l'occurrence, l'axe de la chambre de dosage. Cette sortie essentiellement axiale du produit, permet de le récupérer facilement, notamment au creux de la main, dans le cas d'un shampooing. Le coût de revient est compatible avec les impératifs économiques de la grande distribution dans la mesure où un tel embout met en oeuvre un nombre de pièces limité dont la réalisation, notamment par moulage, n'implique pas l'utilisation de moules compliqués et coûteux. Typiquement, pour un shampooing, le volume de la chambre de dosage est de l'ordre de 5 ml.

Selon un mode de réalisation préférentiel, des moyens formant butée sont prévus pour limiter la course de l'élément de fermeture, lorsque le (ou les) passage(s) de sortie sont en position ouverte.

Les moyens formant butée peuvent être situés à l'extérieur de la chambre doseuse. Alternativement, les moyens formant butée sont portés par l'élément de fermeture lui-même, et ce, à l'intérieur de la chambre doseuse.

Selon un mode de réalisation préférentiel, la chambre doseuse présente une extrémité libre opposée au (ou aux) passage(s) d'entrée, ledit (ou lesdits) passage(s) de sortie étant situé(s) en retrait par rapport à ladite extrémité libre, lesdits moyens de butée étant disposés de telle sorte que, en position ouverte du (ou des) passage(s) de sortie, ledit élément de fermeture ne fasse sensiblement pas saillie par rapport à ladite extrémité libre. On améliore ainsi l'esthétique de l'embout réalisé en réalisant une structure, qui, pour le consommateur, ne montre aucune modification apparente lors du passage de la position de stockage à la position de distribution. En outre, avec une telle configuration, le passage de sortie est disposé sensiblement au fond d'une portion en creux formée par ladite chambre doseuse. Cette configuration contribue à améliorer encore la sortie axiale du produit, ce dernier étant en effet guidé à l'intérieur des parois de la portion en creux. Cet avantage est particulièrement sensible lorsque le consommateur exerce une force importante sur les parois du flacon pour provoquer la sortie de la dose.

Les parois de la portion en creux peuvent en outre, assurer le guidage de la partie de l'élément de fermeture se déplaçant à l'extérieur de la chambre doseuse, des nervures étant avantageusement prévues à cet effet. Ces nervures délimitent en outre des canaux pour acheminer le produit depuis le passage de sortie vers ladite extrémité de la chambre doseuse.

Avantageusement, l'embout doseur est surmonté d'un habillage extérieur comportant au moins un orifice qui, de préférence, est situé en regard du (ou desdits) passage(s) de sortie, lesdits moyens formant butée étant constitués d'une portion dudit habillage extérieur. Outre la fonction butée, l'habillage participe à l'amélioration de l'esthétique de l'ensemble. Cet habillage extérieur permet en outre de jouer sur les caractéristiques, notamment directionnelles, du (ou des) flux de produit distribué.

Avantageusement, des moyens de rappel élastiques sont prévus pour, lorsque cesse la pression du produit sur la première surface du piston, rappeler le piston dans ladite première position. Ces moyens de rappel qui, de préférence, sont constitués d'un ressort hélicoïdal, facilitent le fonctionnement de l'ensemble. Aucune manipulation n'est requise pour, après la distribution d'une dose, préparer l'ensemble pour la distribution d'une nouvelle dose.

Alternativement, il est possible de prévoir que le retour du piston se fasse manuellement par une pression exercée sur l'extrémité libre de l'élément de fermeture, ou lors de la mise en place d'un capuchon amovible sur l'embout doseur.

De préférence, des moyens sont prévus pour, lors du retour du piston dans la première position, notamment sous l'action de moyens de rappel élastiques, entraîner également ledit élément de fermeture dans sa position d'obturation du (ou des) passage(s) de sortie.

A titre d'exemple, lesdits moyens sont constitués d'une butée portée par l'élément de fermeture, et avec laquelle le piston est apte à venir en engagement.

De préférence, le récipient est à parois latérales déformables, la pression du produit sur la première surface du piston étant obtenue par une pression exercée sur lesdites parois, des moyens permettant une entrée d'air dans le récipient lorsque cesse la pression sur les parois, de manière à compenser la diminution de volume de produit à l'intérieur du récipient, suite à la distribution d'une dose de produit. Ainsi, cette configuration offre l'avantage d'autoriser une gestuelle similaire à la gestuelle utilisée conventionnellement, en particulier dans le domaine de la cosmétique, et telle que discutée dans la première partie de la description.

De préférence ladite entrée d'air s'effectue, lors du retour du piston dans la première position, par le (ou les) passage(s) de sortie de la chambre doseuse, avant que celui-ci (ou ceux-ci) ne soit(ent) fermé(s) par l'élément de fermeture. On facilite ainsi la réalisation de l'ensemble, en s'affranchissant de la présence d'un circuit séparé pour la reprise d'air.

Selon un mode de réalisation préférentiel, le (ou les) passages d'entrée s'étendent sur une hauteur axiale telle que sur une première partie de la course du piston entre lesdites première et seconde positions, le (ou les) passage(s) d'entrée soient ouverts, de manière à permettre un remplissage sensiblement complet de ladite chambre doseuse, ledit élément de fermeture étant arrangé de manière à ce que le (ou les) passage(s) de sortie de la chambre doseuse soient obturés lorsque le piston se déplace sur ladite première partie de sa course. Cela permet, dans le cas d'un produit visqueux, de toujours pouvoir remplir sensiblement la totalité de la chambre de dosage, tout particulièrement dans l'hypothèse d'une distribution d'un produit visqueux, intervenant peu de temps après une distribution précédente. En effet dans le cas d'un produit fortement visqueux, le produit s'écoulant par gravité, pourrait ne pas avoir suffisamment de temps pour remplir toute la chambre de dosage. Avec cette caractéristique avantageuse de l'invention, le remplissage par gravité de la chambre de dosage est complété par un remplissage sous pression, intervenant, le cas échéant, au tout début d'une phase de distribution . De manière plus précise, on utilise une pluralité de tels orifices d'entrée disposés de manière régulière tout autour de la périphérie de la chambre de dosage.

Selon un mode de réalisation spécifique, ledit élément de fermeture comporte une première portion adjacente au (ou aux) passage(s) d'entrée, et une seconde portion, située à l'opposé du (ou des) passage(s) d'entrée, ladite seconde portion étant de section supérieure à la section de la première et s'étendant sur une hauteur axiale sensiblement égale à la hauteur axiale du (ou des) passage(s) d'entrée de manière à obturer le (ou les) passage(s) de sortie sur ladite première partie de la course du piston.

De manière préférentielle, lesdites première et seconde parties sont de forme cylindrique, et séparées entre elles par une portion tronconique. On définit ainsi un passage de sortie annulaire lorsque l'ouverture réalisée dans la chambre doseuse, est située en regard de la portion tronconique ou de la portion cylindrique de plus petite section. Une telle géométrie permet d'avoir un flux uniforme de produit tout autour de l'élément de fermeture, à la manière d'un tube, dont la composante axiale est encore améliorée, la partie tronconique formant une rampe pour le produit, de manière à guider son écoulement de manière sensiblement axiale.

Selon un mode de réalisation préférentiel, la chambre doseuse est disposée de façon annulaire tout autour de l'élément de fermeture, ledit élément de fermeture étant centré sur l'axe X de la chambre doseuse. Avantageusement, ladite chambre, ainsi que l'élément de fermeture sont de section circulaire. Bien que la section circulaire soit préférée, toute autre section pourrait toutefois être utilisée, en particulier pour l'élément de fermeture qui pourrait être de section carrée, triangulaire, hexagonale, ovale, en étoile, ou autre. De même, il est possible de prévoir que l'élément de fermeture ne soit pas centré sur l'axe de la chambre de dosage.

L'embout doseur selon l'invention peut comprendre des moyens aptes à permettre, notamment par collage, claquage ou vissage, sa fixation sur un col formé par ledit récipient. Le montage peut également résulter d'un montage en force à l'intérieur du col du récipient. A titre préférentiel, l'embout doseur selon l'invention est obtenu de moulage de matériau thermoplastique, choisi notamment parmi les polypropylènes ou les polyéthylènes.

Selon un autre aspect de l'invention, on réalise également un ensemble pour le conditionnement et la distribution dosée d'un produit, notamment cosmétique, comprenant un récipient formé d'un corps dont une extrémité est fermée par un fond, l'autre extrémité formant un col dont un bord libre délimite une ouverture, un embout doseur selon l'invention étant monté fixement sur ledit col. Le récipient peut se présenter sous forme d'un tube, ou d'un flacon. Sa section peut être quelconque, en particulier ovale, elliptique ou circulaire. Un capuchon peut être prévu pour, notamment en position de stockage, recouvrir de manière amovible ledit embout doseur. Avantageusement, l'embout doseur est monté dans l'axe du récipient. Toutefois, il ne s'agit pas là d'une caractéristique nécessaire. Dans certains cas il peut être souhaitable de monter l'embout doseur avec un angle par rapport à l'axe du récipient, afin d'améliorer le taux de vidange du récipient.

Avantageusement, le corps présente des parois latérales aptes à se déformer lorsqu'une pression est exercée dessus, et à revenir à leur forme initiale lorsque cesse la pression. Typiquement, la pression est exercée de manière perpendiculaire aux parois latérales.

Un tel ensemble est particulièrement adapté pour le conditionnement et la distribution dosée d'un produit cosmétique, notamment un shampooing, un après-shampooing, un gel de coiffage, un lait, ou une crème de soin.

L'invention consiste, mises à part les dispositions exposées ci-dessus, en un certain nombre d'autres dispositions qui seront explicitées ci-après, à propos d'exemples de réalisation non limitatifs, décrits en référence aux figures annexées, parmi lesquelles :
- les figures 1A-1B illustrent un récipient équipé d'un embout doseur selon la présente invention. Dans la figure 1A, le récipient est en position de repos. A la figure 1B, le récipient est en position de distribution.
- la figure 2 représente une vue en coupe axiale d'un mode de réalisation de l'embout doseur selon l'invention; et
- les figures 3A-3D illustrent les différentes étapes du fonctionnement de l'embout distributeur de la figure 2.

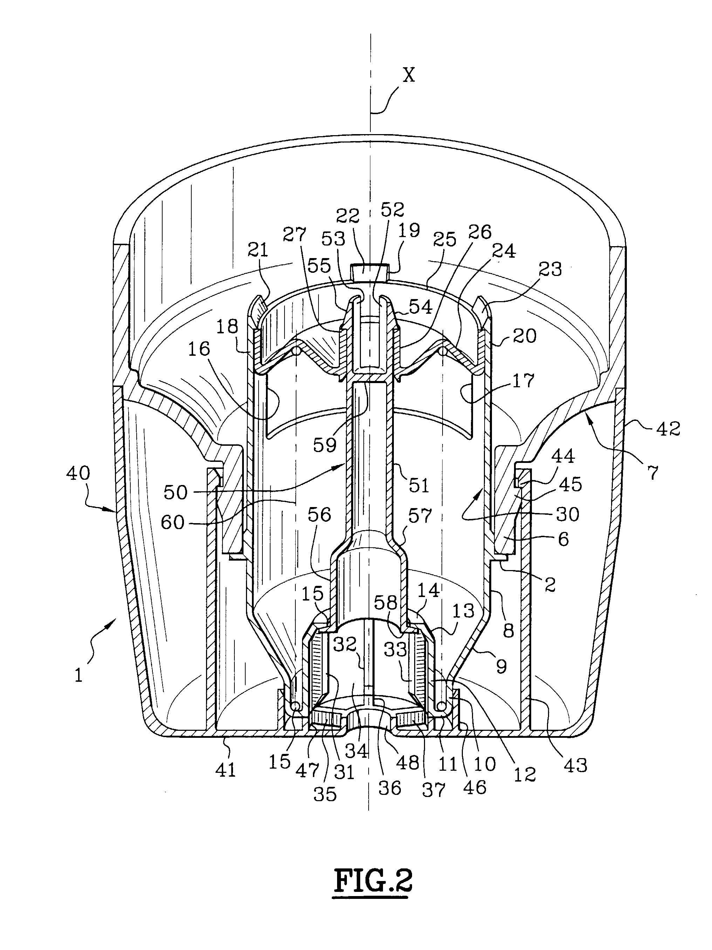

L'embout 1 représenté à la figure 2 (représenté en position tête en bas du récipient) est monté à force (ou par toute autre méthode) à l'intérieur du goulot 6 d'un récipient 7, notamment un flacon à parois déformables. A cet effet, une collerette 2 limite l'enfoncement de l'embout doseur à l'intérieur du goulot 6.

L'embout 1 comporte principalement une chambre doseuse 30, dont le corps est formé d'une jupe cylindrique 8, d'axe X, et de section circulaire. Une extrémité de la jupe 8, située à l'opposé du récipient 7 est reliée à une portion tronconique 9. La portion tronconique 9 est elle même reliée à une portion cylindrique d'extrémité 10, de diamètre inférieur au diamètre de la jupe 8, et dont le bord opposé à la partie tronconique 9 est replié à 90° pour former une collerette annulaire 11. La collerette annulaire 11 définit l'extrémité libre de la chambre doseuse. Le bord de la collerette annulaire 11, opposé à la portion 10, est relié à une jupe cylindrique 12 dont un bord libre est tourné en direction du récipient 7. La jupe cylindrique 12 est de diamètre inférieur au diamètre de la portion cylindrique 10, et forme avec ladite portion 10, une gorge annulaire en U. Le bord libre de la jupe cylindrique 12 présente une portion tronconique 13 se terminant par un rebord transversal 14 tourné en direction de l'axe X. Le rebord transversal 14 délimite une ouverture 15 de section circulaire, et centrée sur l'axe X.

La jupe cylindrique 12 délimite ainsi à l'extérieur de la chambre doseuse 30, une portion en creux 34 s'étendant axialement entre l'ouverture 15 et la collerette annulaire d'extrémité 11. Un capot 40 est disposé sur la chambre doseuse 30. Le capot 40 présente une paroi transversale 41 dont le bord extérieur est relié à une jupe latérale 42, conçue de sorte que, en position montée du capot, ladite jupe latérale 42 soit en alignement avec les parois du récipient 7. La paroi transversale 41 porte également une seconde jupe 43, concentrique avec la jupe latérale 41 et de diamètre plus faible. La seconde jupe 43 présente un bord libre, à l'intérieur duquel est disposé un bourrelet de claquage 44, apte à coopérer avec un cran correspondant 45, formé sur la surface extérieure du col 6 du récipient. La paroi transversale 41 porte également une jupe d'étanchéité 46, concentrique avec les jupes 42 et 43, et dont le diamètre interne est légèrement supérieur au diamètre extérieur de la portion de jupe cylindrique 10 de la chambre doseuse 30, de manière à former étanchéité tout autour de la portion cylindrique 10. La paroi transversale 41 porte une autre jupe 47, concentrique avec les jupes 42, 43, et 46 et dont le diamètre est tel que, en position montée du capot 40, la jupe 47 vienne se positionner en alignement avec la jupe cylindrique 12 de la chambre doseuse 30. Un orifice 48 est réalisé dans la paroi transversale 41, centré sur l'axe X, et de diamètre inférieur au diamètre de l'ouverture 15. La jupe cylindrique 12 porte sur sa face tournée vers la portion en creux 34 des nervures 31, 32, 33 dont la fonction est, comme on le verra plus en détail par la suite d'assurer le guidage de l'élément de fermeture 50 qui va être décrit ci-après. En outre les nervures 31, 32, 33, délimitent des canaux aptes à acheminer le produit entre l'ouverture 15 de la chambre doseuse 30 et l'orifice 48 du capot 40. Des nervures radiales 35, 36, 37 sont prévues également sur la face interne de la paroi transversale 41 du capot, entre la jupe 47 et l'orifice 48, de manière à délimiter également des passages pour le produit, entre le capot 40 et l'élément de fermeture 50, lorsque celui-ci est en position de distribution, qui sera décrite plus en détail par la suite.

A son extrémité libre, opposée à la portion tronconique 9, la jupe 8 présente une pluralité d'échancrures qui, comme on le verra plus en détail par la suite, délimitent avec un bord correspondant 25 d'un piston 24, une pluralité de passages d'entrée 16, 17 du produit, en l'occurrence quatre, disposés de manière régulière sur toute la circonférence de la jupe 8. Les passages d'entrée sont séparés par des pattes d'accrochage et de guidage 18, 19, 20 présentant une certaine élasticité, radialement à la jupe 8, et dont l'extrémité libre se termine par un bourrelet 21, 22, 23, tourné vers l'intérieur de la jupe. Les bourrelets 21, 22, 23 sont destinés comme on le verra plus en détail par la suite au maintien du piston 24 à l'intérieur de la chambre doseuse 30.

Dans la pratique, seule la fonction de guidage est nécessaire. En effet, le maintien du piston 24 à l'intérieur de la chambre doseuse est assuré grâce à son couplage avec l'élément de fermeture 50 dont le mouvement à l'intérieur de la chambre doseuse, en direction du fond du récipient, est limité par la présence d'une butée 58 dont on reparlera plus en détail par la suite. Le couplage du piston avec l'élément de fermeture fera également l'objet d'une description plus détaillée par la suite. Dans ce cas de figure, les bourrelets 21, 22, 23 ne sont pas nécessaires.

A l'intérieur de la jupe 8, est monté à coulisse un piston 24 dont un bord extérieur 25 est replié en direction du fond du récipient 7 de manière à "glisser" de façon plus ou moins étanche le long des parois de la chambre doseuse 30. Le jeu existant entre le bord 25 et les parois de la chambre doseuse, dépend de la viscosité du produit, et du confort recherché à la distribution. Plus la viscosité est importante, et plus le jeu pourra être important. Un bord intérieur du piston est replié en direction du fond du récipient 7, de manière à former une cheminée axiale 26 présentant un bord libre 27 orienté en direction du fond du récipient 7. Entre le bord extérieur 25 et la cheminée axiale 26, le piston présente un profil en forme de V dont le sommet est tourné en direction du fond du récipient. A l'intérieur de la cheminée axiale 26, est monté à coulisse un élément de fermeture 50. L'élément de fermeture 50 présente une première portion 51 de section légèrement inférieure à la section de la cheminée axiale 26, de manière à pouvoir coulisser de façon sensiblement étanche à l'intérieur de ladite cheminée axiale. La portion 51 est fermée en sa partie supérieure par une paroi transversale 59. La paroi transversale 59 est surmontée d'une pluralité de pattes d'accrochage 52, 53, élastiquement déformables, dont la surface extérieure porte un cran d'accrochage 54, 55, apte à former une butée pour le bord libre 27 de la cheminée axiale 26 du piston, de manière à empêcher le piston de se désolidariser de l'élément de fermeture 50. Le montage du piston sur l'élément de fermeture 50 se fait par déformation élastique desdites pattes d'accrochage 52, 53 jusqu'à ce que les crans 54, 55 soient franchis par la cheminée axiale 26. Après franchissement des crans par ladite cheminée axiale, les pattes d'accrochage 52, 53, reviennent par rappel élastique en position de repos, dans laquelle elles forment une butée pour le piston. La portion 51 s'étend sur environ les deux tiers de la hauteur de l'élément de fermeture 50.

L'élément de fermeture 50, comprend à l'opposé des pattes d'accrochage 52, 53, une portion 56, de diamètre supérieur au diamètre de la portion 51. La portion 56 est séparée de la portion 51 par une portion tronconique 57. La portion 56 est de diamètre extérieur légèrement inférieur au diamètre interne de l'ouverture 15 de manière à coulisser de façon sensiblement étanche à l'intérieur de ladite ouverture 15. L'extrémité inférieure de la portion 56 de l'élément de fermeture 50 se termine par un rebord 58 de diamètre externe supérieur au diamètre de l'ouverture 15, lequel rebord est situé à l'extérieur de la chambre doseuse 30, à l'intérieur de la portion en creux 34. Le diamètre extérieur du rebord 58 est légèrement inférieur au diamètre intérieur des nervures 31, 32, 33, de manière à ce que ces dernières assurent un bon guidage en translation de l'élément de fermeture.

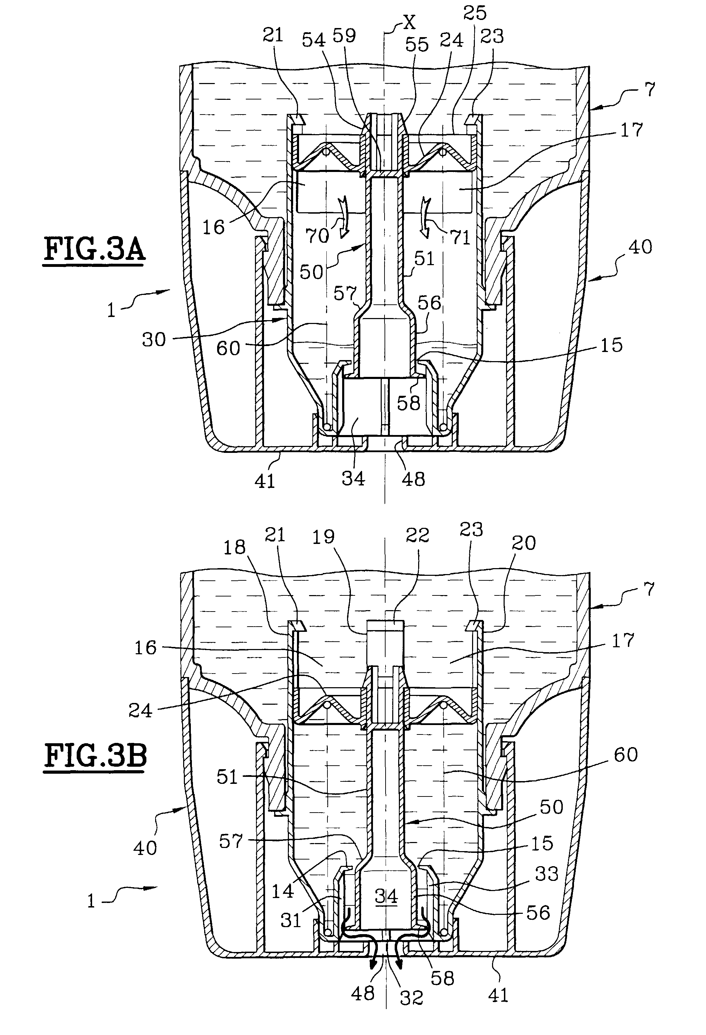

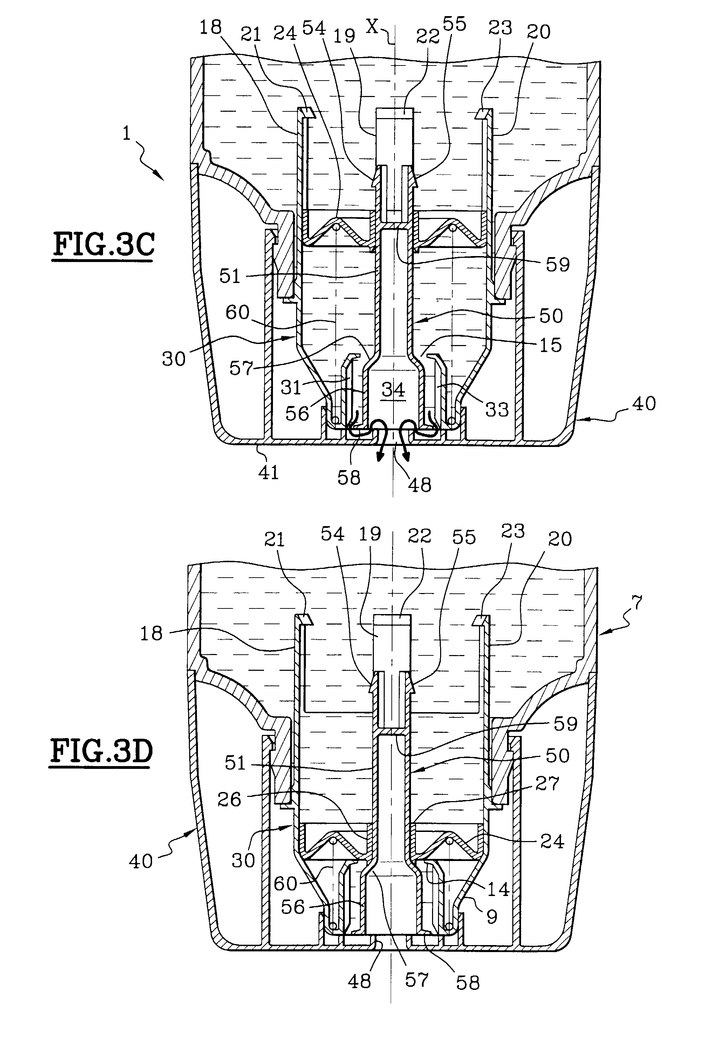

La hauteur maximale des orifices ou passages d'entrée 16, 17 correspond sensiblement à la hauteur (sous les bourrelets 21, 22, 23) des pattes d'accrochage 18, 19, 20, minorée de la hauteur du bord extérieur 25 du piston 24. Typiquement, cette hauteur maximale est de l'ordre de quelques millimètres. A titre d'exemple, les passages d'entrée ont une hauteur axiale qui est de l'ordre de 10 mm. La hauteur de la portion 56 de l'élément de fermeture correspond sensiblement à la hauteur maximale des passages d'entrée 16, 17, de sorte que l'ouverture du passage de sortie 15 se produise sensiblement au même moment que la fermeture des passages d'entrée. Le rebord 58 de l'élément de fermeture est destiné, en position de distribution, à venir en butée contre les nervures 35, 36, 37 formées sur la face interne de la paroi transversale 41 du capot. Dans cette position, l'ouverture 15 est en regard de la portion tronconique 57 (ou de la portion cylindrique 51) de l'élément de fermeture 50 de manière à former un passage annulaire 15 (voir figure 3B, 3C) de sortie du produit, entre le rebord transversal 14 et l'élément de fermeture 50. Un tel passage annulaire peut avoir largeur radiale de l'ordre de quelques mm.

Un ressort hélicoïdal 60 dont une extrémité est en butée contre le piston 24, sensiblement au sommet du V formé par le piston, et dont l'autre extrémité est en butée dans le fond de la gorge annulaire en U formée à extrémité libre de la chambre doseuse 30, contraint, en position de repos, le bord 25 du piston en appui contre les bourrelets d'accrochage 21, 22, 23 de la chambre doseuse 30, de manière à, en l'absence de pression suffisante exercée sur les parois du récipient 7, conférer aux passages d'entrée 16, 17 de la chambre doseuse 30, une ouverture maximale. Dans cette position illustrée à la figure 2, le rebord 58 de l'élément de fermeture 50 est contraint en appui sur le rebord 14 délimitant l'ouverture 15, de manière à obturer cette dernière de manière étanche.

Ainsi, le piston est mobile axialement entre : a) une position haute dans laquelle le rebord 25 du piston est en appui contre les crans 21, 22, 23 des pattes d'accrochage 18, 19, 20. Dans cette position, les passages d'entrée 16, 17 de la chambre doseuse sont ouverts au maximum. L'élément de fermeture 50 est également contraint en position haute, dans laquelle le rebord 58 obture de manière étanche l'ouverture 15 de la chambre doseuse 30 ; et b) une position basse dans laquelle le piston 24 est en appui contre le rebord 14 délimitant l'ouverture 15 et/ou, en appui par sa périphérie contre la portion tronconique 9 de la chambre doseuse. Dans cette position, la chambre doseuse 30 est de volume minimum et est sensiblement (c'est à dire aux jeux près) isolée par le piston 24 du contenu du récipient 7. L'élément de fermeture 50 est en butée contre les nervures 35, 36, et 37. La portion tronconique 57 de l'élément de fermeture 50 est en regard du rebord 14 de la chambre doseuse. Le piston 24 peut avoir un profil tel que, dans cette position à volume minimum de la chambre doseuse, le piston obture l'ouverture 15 de la chambre doseuse. Entre ces deux positions, le passage de sortie 15 de la chambre doseuse est dégagé. Les passages d'entrée 16, 17 ne sont pas en communication avec la chambre doseuse. Le piston 24, sous la pression du produit, expulse le contenu de la dose au travers du passage de sortie 15 (voir figures 3B, 3C).

Il est à noter que l'un des paramètres dont dépend le volume de la dose distribuée est la course axiale du piston. Cette course, et donc, de ce fait, le volume de la dose distribuée, peut être modifiée de façon simple, uniquement en changeant le profil axial du piston 24. Cette solution est nettement plus simple à mettre en oeuvre que celle consistant à modifier le diamètre du piston, puisqu'elle ne nécessite que la modification d'une seule pièce, en l'occurrence, le piston.

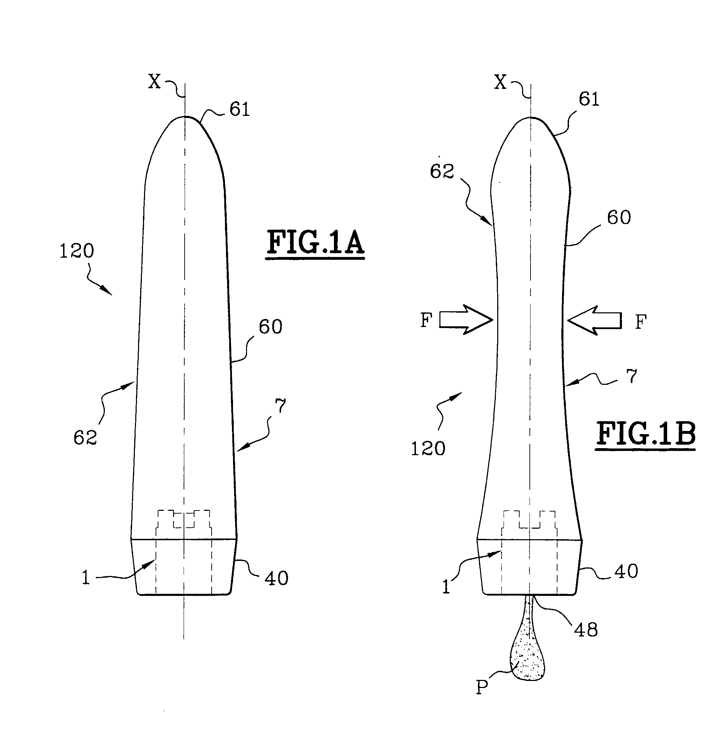

Tel que représenté aux figures 1A et 1B, l'ensemble 120 sur lequel est monté l'embout doseur 1 selon l'invention, est constitué d'un flacon 7, par exemple, en polyéthylène ou polypropylène. Le flacon 7 comporte un corps 62 fermé par un fond 61. Le corps est de section transversale allongée et est formé de deux grandes faces 60, déformables "élastiquement" sous l'effet d'une pression F exercée, de la manière illustrée à la figure 1B, perpendiculairement aux grands côtés du flacon. Dans la position de distribution illustrée à la figure 1B, en réponse à une pression F exercée sur les parois du flacon, perpendiculairement à ses grandes faces, le produit P est distribué, selon un flux essentiellement axial, au travers de l'orifice 48 réalisé dans le capot 40. Pendant la distribution, aucune partie de l'embout doseur (1), et en particulier de l'élément de fermeture, n'émerge de façon sensible hors de l'habillage extérieur 40.

Les figures 1A-1B, et 3A-3D auxquelles il est maintenant fait référence, illustrent le fonctionnement de l'embout doseur décrit en référence à la figure 2. En position de repos (telle que décrite en référence à la figure 2), le récipient 7 est de préférence posé tête en bas sur une surface plane. Dans cette position, le passage de sortie 15 de la chambre doseuse 30 est obturé par le rebord 58 de l'élément de fermeture. Le piston 24, sollicité par le ressort 60 est en butée contre les bourrelets 21, 22, 23 des pattes d'accrochage 18, 19, 20. Les orifices d'entrée 16, 17 sont dégagés de sorte que le produit peut s'écouler par gravité dans la chambre doseuse 30, tout autour de l'élément de fermeture 50, de manière à remplir ladite chambre doseuse 30. Cette position de repos est également représentée à la figure 1A.

A la figure 3A, une pression est exercée sur les parois latérales du récipient, en maintenant d'une main le récipient 7 tête en bas. Dans le cas où le produit n'a pas eu le temps de remplir par gravité la totalité de la chambre doseuse (par exemple entre deux utilisations très rapprochées dans le cas d'un produit très visqueux), le produit est forcé en premier lieu en direction des ouvertures 16 et 17 de la chambre doseuse jusqu'à remplissage complet de celle-ci. Les flux d'entrée du produit sont représentés par les flèches 70 et 71. Dans cette position "communiquante" des ouvertures 16, 17, se crée un équilibre entre les forces qui s'exercent sur chacune des faces du piston 24, le piston ne progressant en direction du passage de sortie 15 de la chambre doseuse 30, que sous l'effet de la pression de produit s'exerçant sur la paroi transversale 59 de l'élément de fermeture 50. Pendant cette première partie du déplacement du piston 24, le passage de sortie 15 est obturé de manière sensiblement étanche par la portion 56 de l'élément de fermeture 50. Les jeux autorisés pour maintenir l'étanchéité nécessaire sont variables en fonction de la viscosité du produit. Dans la pratique, on ajuste les jeux de manière à avoir le meilleur compromis entre étanchéité et confort à l'utilisation.

Après une course sensiblement égale à la hauteur axiale des ouvertures 16, 17, (figure 3B) le piston 24 interrompt la communication entre la chambre doseuse 30 et le récipient 7, les échancrures délimitant les ouvertures 16 et 17 se trouvant alors du côté du piston 24, opposé à la chambre doseuse 30. Sensiblement au même moment, la partie tronconique 57, ainsi que éventuellement, le début de la portion cylindrique 51, de l'élément de fermeture se trouvent en regard du rebord 14, ce qui libère le passage annulaire 15 de sortie de la chambre doseuse 30. Le produit sort alors au travers du passage de sortie 15, débouche dans les canaux délimités par les nervures 31, 32, 33, puis passe sous le rebord 58 de l'élément de fermeture 50 via les canaux délimités par les nervures 35, 36, 37, et enfin, est distribué via l'orifice 48 de l'habillage extérieur 40. De manière simultanée à l'ouverture du passage de sortie 15, voire peu de temps après, l'élément de fermeture 50 arrive en position de butée contre les nervures 35, 36, 37 formées sur la face intérieure du capot 40.

Ensuite, et ainsi que représenté à la figure 3C, sous la pression du produit s'exerçant sur sa face en communication avec le récipient, le piston 24 continue sa progression en direction du passage de sortie 15 de la chambre doseuse 30, l'élément de fermeture 50 étant toujours en butée contre les nervures 35, 36, 37 du capot 40. Le contenu de la chambre doseuse 30 se vide alors au travers du passage de sortie 15 et de l'orifice 48. Ainsi que représenté sur la figure 3C, le produit est distribué selon un flux sensiblement axial. Le produit sort de manière localisée, sensiblement dans l'axe du récipient, et peut être récupéré au creux de la main de l'utilisateur.

A la figure 3D, le piston est en butée contre le rebord 14 de la chambre doseuse, et/ou, sur sa périphérie, contre la partie tronconique 9 de la chambre doseuse 30, laquelle présente alors un volume minimum. Le ressort 60 est comprimé de façon importante. Toutefois, et de préférence, dans cette position, les spires ne sont pas complètement jointives, afin de ne pas créer une barrière pour le produit. A ce moment, la distribution s'interrompt.

En relâchant la pression exercée sur les parois 60 du flacon, ces dernières reviennent dans leur position initiale. Le piston 24, sous l'action de la force de rappel du ressort 60, revient en butée haute contre les bourrelets 21, 22, 23 des pattes 18, 19, 20. Lors de son retour dans cette position, le bord libre 27 de la cheminée axiale 26 du piston vient en engagement avec les crans d'accrochage 54, 55 de l'élément de fermeture 50, entraînant alors ce dernier en position haute, jusqu'à ce qu'il obture le passage de sortie 15 de la chambre doseuse. Lors de ce retour en position haute, de l'air est aspiré à l'intérieur du récipient 7 via le passage de sortie 15, avant sa fermeture, de manière à compenser la perte de volume à l'intérieur du récipient, occasionné par la distribution d'une dose de produit. Il est à noter que la reprise d'air se produit en premier lieu par aspiration via le passage de sortie 15 lors de la remontée du piston sous les forces de rappel élastique du ressort 60. L'air ainsi aspiré est ensuite acheminé dans le récipient 7 via les ouvertures 16, 17, lorsque la communication est rétablie entre la chambre doseuse 30 et le récipient 7.

Dans la description détaillée qui précède, il a été fait référence à des modes de réalisation préférés de l'invention. Il est évident que des variantes peuvent y être apportées sans s'écarter de l'esprit de l'invention telle que revendiquée ci-après.

## Revendications

1. Embout doseur (1) destiné à être monté sur un récipient (7) contenant un produit, ledit embout (1) comprenant une chambre doseuse (30), à l'intérieur de laquelle est monté à coulisse un piston (24), monté de manière à pouvoir passer d'une première position dans laquelle la chambre doseuse (30) a un volume maximum à une seconde position dans laquelle la chambre doseuse (30) a un volume minimum, ladite chambre doseuse comprenant au moins un passage d'entrée (16, 17), ouvert, lorsque le piston (24) est dans la première position, et fermé de façon sensiblement étanche lorsque le piston (24) est dans la seconde position, le piston (24) étant couplé à un élément de fermeture (50) qui, dans la première position du piston (24), obture de façon sensiblement étanche, au moins un passage de sortie (15) de la chambre doseuse (30), et libère ledit (ou lesdits) passage(s) de sortie (15) lors de la fermeture du (ou des) passage(s) d'entrée (16, 17), ledit élément de fermeture (50) se déplaçant sur une course inférieure à la course du piston (24).

2. Embout doseur selon la revendication 1 caractérisé en ce que ledit (ou lesdits) passage(s) de sortie (15) ainsi que l'élément de fermeture (50) sont agencés de sorte que le produit (P) sorte de l'embout doseur selon au moins un flux à composante essentiellement axiale.

3. Embout doseur selon la revendication 1 ou 2 caractérisé en ce que des moyens formant butée (35, 36, 37) sont prévus pour limiter la course de l'élément de fermeture (50), lorsque le (ou les) passage(s) de sortie (15) sont en position ouverte.

4. Embout doseur selon la revendication 3 caractérisé en ce que les moyens formant butée (35, 36, 37) sont situés à l'extérieur de la chambre doseuse (30).

5. Embout doseur selon l'une quelconque des revendications 1 à 4 caractérisé en ce que la chambre doseuse (30) présente une extrémité (11) opposée au (ou aux) passage(s) d'entrée (16, 17), ledit (ou lesdits) passage(s) de sortie (15) étant situé(s) en retrait par rapport à ladite extrémité (11), lesdits moyens de butée (35, 36, 37) étant disposés de telle sorte que, en position ouverte du (ou des) passage(s) de sortie (15), ledit élément de fermeture (50) ne fasse sensiblement pas saillie par rapport à ladite extrémité (11).

6. Embout doseur selon la revendication 5 caractérisé en ce que ledit (ou lesdits) passage(s) de sortie (15) sont situés sensiblement au fond d'une portion en creux (34) formée par ladite chambre doseuse (30).

7. Embout doseur selon la revendication 6 caractérisé en ce que ladite portion en creux (34) comporte des moyens (31, 32, 33) aptes à assurer un guidage d'une portion (58) de l'élément de fermeture (50) se déplaçant à l'extérieur de la chambre doseuse (30).

8. Embout doseur selon la revendication 7 caractérisé en ce que lesdits moyens comportent une pluralité de nervures (31, 32, 33) réalisées sur une paroi (12) de ladite portion en creux (34), lesdites nervures (31, 32, 33) délimitant en outre une pluralité de canaux aptes à guider le produit depuis le (ou les) passage(s) de sortie (15) vers un orifice de sortie (48) de l'embout doseur (1).

9. Embout doseur selon l'une quelconque des revendications 3 à 8 caractérisé en ce que l'embout doseur (1) est surmonté d'un habillage extérieur (40) comportant au moins un orifice (48) en regard du (ou desdits) passage(s) de sortie (15), lesdits moyens formant butée (35, 36, 37) étant constitués d'une portion dudit habillage extérieur (40).

10. Embout doseur selon l'une quelconque des revendications 3 à 9 caractérisé en ce que lorsque l'élément de fermeture (50) est en butée, le piston (24) est apte à coulisser par rapport à l'élément de fermeture (50) jusqu'à ce que le piston (24) soit dans la seconde position.

11. Embout doseur selon l'une quelconque des revendications 1 à 10 caractérisé en ce que des moyens de rappel élastiques (60) sont prévus pour, lorsque cesse la pression du produit sur le piston (24), rappeler le piston (24) dans ladite première position.

12. Embout selon l'une quelconque des revendications 1 à 11 caractérisé en ce que des moyens (27, 54, 55) sont prévus pour, lors du retour du piston (24) dans la première position, entraîner ledit élément de fermeture (50) dans sa position d'obturation du (ou des) passage(s) de sortie (15).

13. Embout selon la revendication 12 caractérisé en ce que lesdits moyens sont constitués d'une butée (54, 55) portée par l'élément de fermeture (50), et avec laquelle le piston (24) est apte à venir en engagement.

14. Embout doseur selon l'une quelconque des revendications 1 à 13 caractérisé en ce que des moyens (15, 16, 17) sont prévus pour permettre une reprise d'air à l'intérieur du récipient (7) lors du retour du piston (24) dans la première position.

15. Embout doseur selon la revendication 14 caractérisé en ce que la reprise d'air à l'intérieur du récipient (7) lors du retour du piston (24) dans la première position, se fait au travers du ou des passage(s) de sortie (15).

16. Embout doseur selon l'une quelconque des revendications 1 à 15 caractérisé en ce que le (ou les) passages d'entrée (16, 17) s'étendent sur une hauteur axiale telle que sur une première partie de la course du piston (24) entre lesdites première et seconde positions, le (ou les) passage(s) d'entrée (16, 17) soient ouverts, de manière à permettre un remplissage sensiblement complet de ladite chambre doseuse (30), ledit élément de fermeture (50) étant arrangé de manière à ce que le (ou les) passage(s) de sortie (15) de la chambre doseuse (30) soient obturés lorsque le piston (24) se déplace sur ladite première partie de sa course.

17. Embout selon la revendication 16 caractérisé en ce que l'élément de fermeture (50) se déplace avec le piston (24) sur ladite première partie de la course du piston (24).

18. Embout doseur selon la revendication 16 ou 17 caractérisé en ce que ledit élément de fermeture (50) comporte une première portion (51) adjacente au (ou aux) passage(s) d'entrée (16, 17), et une seconde portion (56), située à l'opposé du (ou des) passage(s) d'entrée, ladite seconde portion (56) étant de section supérieure à la section de la première (51) et s'étendant sur une hauteur axiale sensiblement égale à la hauteur axiale du (ou des) passage(s) d'entrée (16, 17) de manière à obturer sensiblement le (ou les) passage(s) de sortie (15) sur ladite première partie de la course du piston (24).

19. Embout doseur selon la revendication 18 caractérisé en ce que lesdites première (51) et seconde parties (56) sont de préférence, de forme cylindrique, et séparées entre elles par une portion tronconique (57).

20. Ensemble (120) pour le conditionnement et la distribution dosée d'un produit (P), notamment cosmétique, comprenant un récipient (7) formé d'un corps (62) dont une extrémité est fermée par un fond (61), l'autre extrémité formant un col (6) dont un bord libre délimite une ouverture, un embout doseur (1) étant monté fixement sur ledit col (6), caractérisé en ce que l'embout doseur (1) est conforme à l'une quelconque des revendications précédentes.

21. Ensemble selon la revendication 20 caractérisé en ce que le corps (62) présente des parois (60) aptes à se déformer lorsqu'une pression (F) est exercée dessus, et à revenir à leur forme initiale lorsque cesse ladite pression.

22. Utilisation d'un ensemble (120) selon l'une quelconque des revendications 20 ou 21 pour le conditionnement et la distribution dosée d'un produit cosmétique, notamment un shampooing, un après shampooing, un gel de coiffage, un lait ou une crème de soin.
